# EUROPÄISCHE PATENTANMELDUNG

(11) **EP 0 997 350 A1**
(43) Veröffentlichungstag der Anmeldung: **03.05.2000**
(21) Anmeldenummer: 99119264.2
(22) Anmeldetag: 28.09.1999
(51) Int. Cl.: B60R 21/01

(54) **Airbagsystem mit einer Vorrichtung zur Erzeugung eines Feldes um den Luftsack**

(30) Priorität: 28.10.1998 DE 19849717
(71) Anmelder: Bayerische Motoren Werke Aktiengesellschaft, 80809 München (DE)
(72) Erfinder: Eisenmann, Lutz, 85241 Ampermoching (DE); Fiege, Marcus, 80638 München (DE); Niess, Michael, 85757 Karlsfeld (DE)
(74) Vertreter: Zollner, Richard

(57) **Zusammenfassung**

Die Erfindung betrifft ein Airbagsystem mit einem mittels einer Aufblasvorrichtung (12) aufblasbaren Luftsack (8, 8'), wobei die Aufblasvorrichtung mit einer Steuervorrichtung (14) verbunden ist, sowie ein entsprechendes Verfahren zum gesteuerten Aufblasen eines solchen Luftsackes.

Die Aufgabe, ein situationsangepaßtes und funktionsgerechtes Aufblasen des Luftsackes zu gewährleisten, wird dadurch gelöst, daß eine Vorrichtung (16) zur Erzeugung eines elektrischen oder magnetischen Feldes (18) zumindest um einen Teil des Luftsackes vorgesehen ist, eine Erfassungseinrichtung (16) vorgesehen ist, mit welcher eine Veränderung des Feldes detektierbar ist, und die Erfassungseinrichtung mit der Steuerungsvorrichtung gekoppelt ist.

## Beschreibung

Die Erfindung betrifft ein Airbagsystem sowie ein Verfahren zum gesteuerten Aufblasen eines Luftsackes gemäß den Oberbegriffen der Ansprüche 1 bzw. 6.

Airbagsysteme in Fahrzeugen sind heute allgemein bekannt. In der Regel wird ein zunächst hinter einer Abdeckung in einem Gehäuse aufbewahrter Luftsack von einem Gasgenerator oder einer Aufblasvorrichtung dann aufgeblasen, wenn bei einer Kollision des Fahrzeugs mit einem Gegenstand Fahrzeuginsassen vor Verletzungen geschützt werden sollen.

Als Gasgenerator wird dabei meist ein pyrotechnischer Generator oder ein sog. Hybridgenerator verwendet. Beim Aufblasen des Luftsackes entstehen - gerade bei pyrotechnischen Gasgeneratoren - extreme Kräfte.

Ein Problem ergibt sich dann, wenn sich im Aufblasbereich des Luftsackes Gegenstände oder Insassen eines Fahrzeuges befinden. Durch die Wucht des Aufpralls können zum Teil erhebliche Verletzungen resultieren.

Als Maßnahme zur Vermeidung solcher Verletzungen wurden bereits gesteuerte Aufblasvorgänge vorgeschlagen. Befindet sich ein Gegenstand oder ein Insasse des Fahrzeugs im Aufblasbereich des Luftsackes, so wird dieser in einer Weise aufgeblasen, daß Beschädigungen oder Verletzungen möglichst nicht stattfinden. Beispielsweise wird nur mit geringerem Druck oder mit einer geringeren Gasmenge aufgeblasen. Es kann auch die Baggeometrie oder die Luftführung verändert werden.

Zur Erfassung eines im Aufblasbereich des Luftsackes befindlichen Gegenstandes wurden verschiedene Erfassungsvorrichtungen vorgeschlagen. Beispielsweise können Sensoren im Fahrzeugsitz angeordnet sein, die Gegenstände auf dem Sitz (beispielsweise Kindersitze) oder auch eine 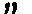 Out-of-Position"-Position eines Fahrzeuginsassen erfassen können.

Ferner wurden bereits Ultraschall oder Lasersysteme beschrieben, die den Aufblasbereich überwachen und einer Steuerung für eine Aufblasvorrichtung des Luftsackes ein entsprechendes Signal geben, wenn sich irgendein Gegenstand im Aufblasbereich befindet.

Aufgabe der vorliegenden Erfindung ist es, ein Airbagsystem der eingangs genannten Art anzugeben, mit dem eine für einen Gegenstand oder einen Fahrzeuginsassen gefährliche Kollision mit einem aufzublasenden Luftsack vermieden, dennoch die Schutzfunktion des Airbagsystems jedoch sichergestellt wird.

Diese Aufgabe wird vorrichtungstechnisch durch die im Anspruch 1 und verfahrenstechnisch durch die im Anspruch 6 genannten Merkmale gelöst.

Erfindungswesentlich ist, daß um den Luftsack selbst - zumindest um einen Teilbereich desselben - beim Aufblasvorgang ein elektrisches oder magnetisches Feld erzeugt wird, dessen Veränderungen erfaßt werden. Solche Veränderungen werden durch ein Eindringen eines Gegenstandes oder Körpers in den Bereich des elektrischen oder magnetischen Feldes aufgrund veränderter physikalischer Umstände, beispielsweise seiner veränderten Leitfähigkeit oder Elektrizitätskonstanten, festgestellt. In Abhängigkeit von der Veränderung des erzeugten Feldes kann die Aufblasvorrichtung in der Weise gesteuert werden, daß eine Kollision mit dem erfaßten Gegenstand oder der erfaßten Person in nicht zu starkem Maße stattfindet, so daß Beschädigungen oder Verletzungen vermieden werden. Dennoch wird die Schutzfunktion des Airbagsystems gewährleistet.

Gemäß einer bevorzugten Ausführungsform ist in das Luftsackgewebe oder auf die Luftsackoberfläche eine Antennenvorrichtung aufgebracht bzw. eingearbeitet. Alternativ kann auch das Luftsackgewebe selbst in der für die Erfindung erforderlichen Weise, nämlich zur Erzeugung und Erfassung eines elektrischen oder magnetischen Feldes, ausgestattet sein.

Natürlich kann die Steuervorrichtung auch noch auf andere Größen wie die Unfallschwere, das Insassengewicht etc. reagieren und einen geeigneten Aufblasvorgang initiieren, beispielsweise die Aufblasstärke, die Abströmleistung des Generators oder die Gasführung verändern. Gemäß einer weiteren Alternative ist es möglich, die Luftsackgeometrie zu verändern. Beispielsweise kann der Luftsack nur zum Teil entfaltet werden. Entsteht innerhalb des Luftsackes ein zu großer Druck, wird er beispielsweise über ein Überdruckventil nach außen abgeführt.

Mit der vorliegenden Erfindung läßt sich auf einfache und wirkungsvolle Weise die 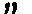 Out-of-Position"-Problematik lösen. Insbesondere kann auf viele Einrichtungen wie Sensoren, die kostenintensiv sind, verzichtet werden.

Mit der vorliegenden Erfindung läßt sich auf einfache und wirkungsvolle Weise die 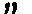 Out-of-Position"-Problematik lösen. Insbesondere kann auf viele Einrichtungen wie Sensoren, die kostenintensiv sind, verzichtet werden.

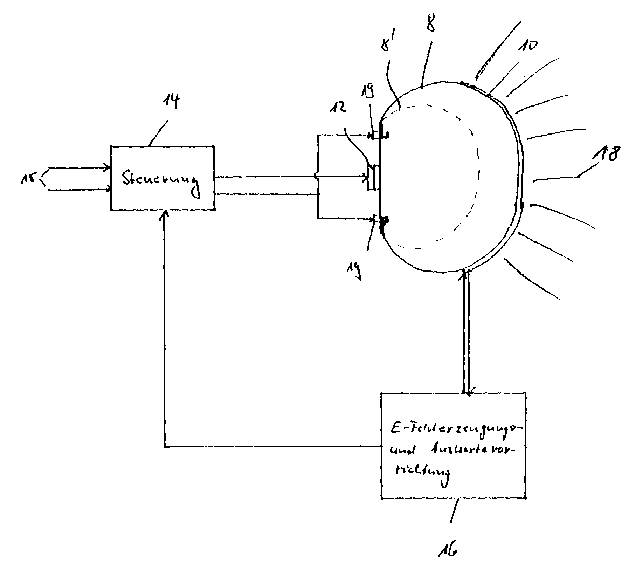

Die vorliegende Erfindung wird anhand eines einzigen Ausführungsbeispiels und der einzigen beigefügten Zeichnung näher erläutert. Die Zeichnung zeigt ein schematisches Blockdiagramm eines erfindungsgemäßen Airbagsystems.

Ein aufblasbarer Airbag 8 ist zunächst in einem nicht dargestellten Lenkrad unter einer Abdeckung angeordnet. Mit dem Airbag 8 ist ein pyrotechnischer Gasgenerator 12 verbunden, der den Airbag 8 in mehreren Stufen aufblasen kann. Der Gasgenerator 12 ist mit einer Steuerung 14 verbunden, die diesen beispielsweise in einem Crashfall entsprechend der Eingangssignale zündet. Mit der Bezugsziffer 15 sind zwei Eingänge markiert, über die vorliegend Eingangssignale, welche die Unfallschwere und das Insassengewicht beschreiben, der Steuerung 14 zugeführt werden.

Auf dem Airbag ist zumindest teilweise eine Antennenanordnung 10 in Form einer Beschichtung aufgebracht, die mit einer E-Felderzeugungs- und Auswertevorrichtung 16 verbunden ist. Die E-Felderzeugungs- und Auswertevorrichtung generiert im Aktivierungsfall des Airbagsystems ein elektrisches Feld 18. Bewegt oder befindet sich ein Gegenstand oder eine Person in dem elektrischen Feld 18, so wird dadurch dessen physikalische Eigenschaft, beispielsweise die Elektrizitätskonstante verändert, was wiederum von der Auswertevorrichtung 16 detektiert wird.

Ein einer solchen Änderung des elektrischen Feldes entsprechendes Signal wird an die Steuerung 14 weitergeleitet, die in Reaktion darauf eine weitere Zündung von Stufen des Gasgenerators 12 unterbindet. Damit wird der Luftsack 8 nur mit einem geringeren Druck bzw. einer geringeren Luftmenge befüllt, so daß eine Kollision des sich im Bereich des elektrischen Feldes des Luftsackes 8 befindlichen Gegenstandes in einem ungefährlichen Bereich gehalten werden kann.

Ferner ist in der Figur schematisch eine Klammervorrichtung 19 dargestellt, die den Luftsack 8 bei seiner Entfaltung in unterschiedlichem Maß freigibt. Bei einem entsprechenden Signal von der Steuerung 14 gibt die Klammervorrichtung 19 den Luftsack nur in einem geringeren Maße frei, was durch die mit der Bezugsziffer 8 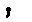 gekennzeichnete Luftsackentfaltung dargestellt ist. Der sich möglicherweise innerhalb des nur teilweise entfalteten Luftsackes 8 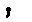 befindliche Druck kann mit einer (nicht dargestellten) Überdruckventilvorrichtung begrenzt werden.

Die erfindungsgemäße Vorrichtung hat den Vorteil, daß sich das erzeugte Feld gerade mit dem Luftsack bewegt, so daß immer die Distanz zwischen einem Gegenstand und dem Luftsack abgefragt wird. Die absolute Position eines Gegenstands oder eines Fahrzeuginsassen im Raum spielt dagegen nur eine untergeordnete Rolle.

## Patentansprüche

1. Airbagsystem mit einem mittels einer Aufblasvorrichtung (12) aufblasbaren Luftsack (8, 8'), wobei die Aufblasvorrichtung mit einer Steuervorrichtung (14) verbunden ist,
dadurch gekennzeichnet,
daß eine Vorrichtung (16) zur Erzeugung eines elektrischen oder magnetischen Feldes (18) zumindest um einen Teil des Luftsackes (8, 8') vorgesehen ist, eine Erfassungseinrichtung (16) vorgesehen ist, mit welcher eine Veränderung des erzeugten Feldes detektierbar ist, und die Erfassungseinrichtung mit der Steuervorrichtung gekoppelt ist.

2. Airbagsystem nach Anspruch 1,
dadurch gekennzeichnet,
daß die Vorrichtung zur Erzeugung (16) eines elektrischen oder magnetischen Feldes eine Antennenvorrichtung im Luftsackgewebe oder auf der Luftsackoberfläche (10) umfaßt.

3. Airbagsystem nach Anspruch 1,
dadurch gekennzeichnet,
daß das Airbaggewebe selbst eine Antennenvorrichtung bildet.

4. Airbagsystem nach einem der vorhergehenden Ansprüche,
dadurch gekennzeichnet,
daß die Aufblas- (12) und Steuervorrichtungen (14) derart ausgebildet und aufeinander abgestimmt sind, daß die Charakteristiken der Aufblasleistung, der Aufblaskinematik und/oder der Luftführung in den Luftsack in Abhängigkeit von der Veränderung des elektrischen oder magnetischen Feldes wählbar sind.

5. Airbagsystem nach einem der vorhergehenden Ansprüche,
dadurch gekennzeichnet,
daß Mittel (19) zur Auswahl der Geometrie des aufblasbaren Luftsackes (8, 8') vorgesehen sind und die Mittel (19) in Abhängigkeit von der Veränderung des elektrischen oder magnetischen Feldes beaufschlagt werden.

6. Verfahren zum gesteuerten Aufblasen eines Luftsackes, bei dem der Luftsack mit einer Aufblasvorrichtung steuerbar befüllt wird und die Aufblasvorrichtung von einer Steuervorrichtung beaufschlagt wird,
dadurch gekennzeichnet,
daß ein elektrisches oder magnetisches Feld zumindest um einen Teil des Luftsackes erzeugt wird, eine Veränderung dieses Feldes detektiert wird und die Steuervorrichtung in Abhängigkeit der Veränderung des Feldes die Aufblasvorrichtung steuert.
